(19) Europäisches Patentamt
European Patent Office
Office européen des brevets

(11) **EP 3 291 628 A1**

(12) **EUROPEAN PATENT APPLICATION**

(43) Date of publication:
**07.03.2018 Bulletin 2018/10**

(51) Int Cl.:
**H04W 74/00** (2009.01)　　　**H04W 74/08** (2009.01)
**H04W 72/12** (2009.01)

(21) Application number: **17154627.8**

(22) Date of filing: **03.02.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **28.08.2016 US 201662380468 P**

(71) Applicant: **LG ELECTRONICS INC.**
**Yeongdeungpo-gu**
**Seoul, 07336 (KR)**

(72) Inventors:
• **CHOI, Kukheon**
**06772 Seoul (KR)**

• **LEE, Kilbom**
**06772 Seoul (KR)**
• **KIM, Kyuseok**
**06772 Seoul (KR)**
• **AHN, Minki**
**06772 Seoul (KR)**

(74) Representative: **Frenkel, Matthias Alexander**
**Wuesthoff & Wuesthoff**
**Patentanwälte PartG mbB**
**Schweigerstrasse 2**
**81541 München (DE)**

Remarks:
Amended claims in accordance with Rule 137(2) EPC.

(54) **METHOD OF PERFORMING RANDOM ACCESS PROCEDURE AND COMMUNICATION APPARATUS THEREFOR**

(57)　　A method for performing a random access procedure by a user equipment (UE) in a wireless communication system comprises transmitting a random access preamble, the random access preamble indicating whether transmission of a radio resource control (RRC) connection request is requested or transmission of the RRC connection request together with a buffer status report (BSR) is requested in the random access procedure; and receiving a random access response in response to the random access preamble, the random access response including uplink resource allocation information, wherein an uplink resource included in the uplink resource allocation information is assigned based on the random access preamble.

FIG. 16

EP 3 291 628 A1

**Description**

[Technical Field]

The present invention relates to wireless communication and, more particularly, to a method of performing a random access (e.g., RACH) procedure and a communication apparatus therefor.

[Background Art]

A new RAT (NR) system is different from an LTE system in that, in the NR system, physical channels need to be newly configured according to the configuration of a pair of a Tx beam of a BS and an Rx beam of a UE (analog beam pair) and a pair of a Tx beam of a UE and an Rx beam of a BS (analog beam pair).
Similarly to a downlink (DL) configuration, an uplink (UL) physical channel needs to be configured in consideration of the analog beam pair. However, in the NR system, components and procedures for multiple resource allocation for UL data transmission or retransmission according to the configuration of a RACH of the NR system are not proposed yet.

[Disclosure]

[Technical Problem]

An object of the present invention devised to solve the problem lies in a method for performing a random access (e.g., RACH) procedure by user equipment in a wireless communication system.
An object of the present invention devised to solve the problem lies in a UE for performing a random access (e.g., RACH) procedure in a wireless communication system.
The technical problems solved by the present invention are not limited to the above technical problems and other technical problems which are not described herein will become apparent to those skilled in the art from the following description.

[Technical Solution]

The object of the present invention can be achieved by providing a method for performing a random access procedure by user equipment in a wireless communication system including transmitting a random access preamble, the random access preamble indicating whether transmission of only a radio resource control (RRC) connection request is requested or transmission of the RRC connection request together with a buffer status report (BSR) is requested in the random access procedure and receiving a random access response in response to the random access preamble, the random access response including uplink resource allocation information, wherein an uplink resource included in the uplink resource allocation information is assigned based on the random access preamble.
The method may further include transmitting a message including the RRC connection request and the BSR based on the random access response. The message may include a MAC subheader and an index of a logical channel identifier (LCID) may be set to a specific value in the MAC subheader to indicate that the RRC connection request and the BSR are transmitted in the message. The message may include a BSR MAC CE and, when the index of the LCID is set to the specific value, an uplink data transmission type may be indicated by a type index of the BSR in the BSR MAC CE. The message may include a BSR MAC CE, the BSR MAC CE including buffer size information indicating an amount of data to be transmitted by the UE, and the method may include, in response to the message, receiving a message including uplink control information including RRC connection setup information and resource allocation information for the amount of data to be transmitted by the UE. The uplink control information may include a location of a resource allocated for the amount of data to be transmitted by the UE, a modulation and coding scheme (MCS) to be applied upon data transmission, or redundancy version (RV) information.
The method may further include transmitting uplink data on an uplink resource region indicated by the uplink control information. The uplink control information may include a first field indicating whether the UE splits and transmits data based on the amount of data to be transmitted by the UE. When the first field indicates that the UE splits and transmits the data, the uplink control information may further include the resource assignment information per split data. When the first field indicates that the UE splits and transmits the data, the uplink control information may further include information regarding a sequence number of split data. The uplink control information may include UL grant.
The indicating of whether transmission of only the RRC connection request is requested or transmission of the RRC connection request together with the buffer status report (BSR) is requested may be determined by a sequence hopping number applied to a random access preamble sequence for the random access preamble. The specific value set as the index of the LCID may be "10111". The uplink data transmission type may include information regarding a reception beam of a base station (BS) corresponding to uplink data for retransmission or uplink data for new transmission. The random access procedure may be a RACH procedure, the random access preamble may be a RACH preamble, and the random access response may be a RACH response.

According to another aspect of the present invention, a user equipment (UE) for performing a random access procedure in a wireless communication system includes a transmitter for transmitting a random access preamble, the random access preamble indicating whether transmission of only a RRC connection request is requested or transmission of the RRC connection request together with a buffer status report (BSR) is requested in the RACH procedure and a receiver for receiving a random access response in response to the random access preamble, the random access response including uplink resource allocation information, wherein an uplink resource included in the uplink resource allocation information is assigned based on the random access preamble. The UE comprises least one processor and at least one memory, the at least one memory containing instructions executable by the at least one processor such that the UE is operable to perform the functions described herein.

The transmitter may further transmit a message including the RRC connection request and the BSR based on the random access response. The message may include a MAC subheader, and an index of a logical channel identifier (LCID) may be set to a specific value in the MAC subheader to indicate that the RRC connection request and the BSR are transmitted in the message. The message may include a BSR MAC CE, and when the index of the LCID is set to the specific value, an uplink data transmission type may be indicated by a type index of the BSR in the BSR MAC CE. The message may include a BSR MAC CE, the BSR MAC CE including buffer size information indicating an amount of data to be transmitted by the UE, and the receiver may further receive, in response to the message, a message including uplink control information including RRC connection setup information and resource allocation information allocated for the amount of data to be transmitted by the UE. The uplink control information may include a location of a resource allocated for the amount of data to be transmitted by the UE, a modulation and coding scheme (MCS) to be applied upon data transmission, or redundancy version (RV) information.

The transmitter may further transmit uplink data on an uplink resource region indicated in the uplink control information. The uplink control information may include a first field indicating whether the UE splits and transmits data based on the amount of data to be transmitted by the UE. When the first field indicates that the UE splits and transmits the data, the uplink control information may further include the resource assignment information per split data. When the first field indicates that the UE splits and transmits the data, the uplink control information may further include information regarding a sequence number of split data. The uplink control information may include UL grant.

The indicating of whether transmission of only the RRC connection request is requested or transmission of the RRC connection request together with the buffer status report (BSR) is requested may be determined by a sequence hopping number applied to a random access preamble sequence for the random access preamble. The specific value set as the index of the LCID may be "10111". The uplink data transmission type may include information regarding a reception beam of a base station (BS) corresponding to uplink data for retransmission or uplink data for new transmission. The random access procedure may be a RACH procedure, the random access preamble may be a RACH preamble, and the random access response may be a RACH response.

[Advantageous Effects]

Efficient use of UL resources according to a random access (e.g., RACH) transmission procedure for analog BS Rx beams becomes possible.

It will be appreciated by persons skilled in the art that that the effects that can be achieved through the present invention are not limited to what has been particularly described hereinabove and other advantages of the present invention will be more clearly understood from the following detailed description.

[Description of Drawings]

The accompanying drawings, which are included to provide a further understanding of the invention, illustrate embodiments of the invention and together with the description serve to explain the principle of the invention. In the drawings:

FIG. 1 is a block diagram for configurations of a base station 105 and a user equipment 110 in a wireless communication system 100.
FIG. 2 is a diagram showing the structure of an analog BS Rx beam and a PRACH subframe.
FIGs. 3 and 4 are diagrams showing respective RACH resource structures.
FIG. 5 is a diagram showing a RACH procedure for analog BS Rx beam sweeping.
FIG. 6 is a diagram showing a BSR type in a MAC-CE.

FIG. 7 is a diagram showing the configuration of a MAC header and a MAC payload.

FIG. 8 is a diagram showing a BSR index and a buffer size table.

FIG. 9 is a diagram illustrating an SR procedure.

FIG. 10 is a diagram showing a RACH transmission procedure of a UE in an idle mode and a UL resource allocation procedure including an SR and a BSR.

FIG. 11 is a diagram showing the basic structure (TDD) of UL resources according to analog Rx beams of a BS.

FIG. 12 is a diagram showing UL resource allocation corresponding to analog Rx beam 0 of a BS.

FIG. 13 is a diagram illustrating possibility of UL transmission delay corresponding to analog Rx beam 0 of a BS.

FIG. 14 is a diagram showing the case where service requirements are not satisfied.

FIG. 15 is a diagram illustrating efficiency of UL resource allocation according to an SR procedure of UL initial accessing UEs.

FIG. 16 is a diagram showing a RACH procedure according to the present invention.

FIG. 17 is a diagram illustrating an LCID and a BSR configuration for configuring simultaneous transmission of a BSR and an RRC connection request.

FIG. 18 is a diagram showing UL grant corresponding to each UL resource (UL resource 0 and UL resource 2 are used according to BSR type).

FIG. 19 is a diagram illustrating a general UL grant transmission method upon considering a split method and a UL grant transmission method in which cross resource scheduling is applied upon considering a split method.

[Best Mode]

Reference will now be made in detail to the preferred embodiments of the present invention, examples of which are illustrated in the accompanying drawings. In the following detailed description of the invention includes details to help the full understanding of the present invention. Yet, it is apparent to those skilled in the art that the present invention can be implemented without these details. For instance, although the following descriptions are made in detail on the assumption that a mobile communication system includes 3GPP LTE system, the following descriptions are applicable to other random mobile communication systems in a manner of excluding unique features of the 3GPP LTE.

Occasionally, to prevent the present invention from getting vaguer, structures and/or devices known to the public are skipped or can be represented as block diagrams centering on the core functions of the structures and/or devices. Wherever possible, the same reference numbers will be used throughout the drawings to refer to the same or like parts.

Besides, in the following description, assume that a terminal is a common name of such a mobile or fixed user stage device as a user equipment (UE), a mobile station (MS), an advanced mobile station (AMS) and the like. And, assume that a base station (BS) is a common name of such a random node of a network stage communicating with a terminal as a Node B (NB), an eNode B (eNB), an access point (AP) and the like. Although the present specification is described based on 3GPP LTE system or 3GPP LTE-A system, contents of the present invention may be applicable to various kinds of other communication systems.

In a mobile communication system, a user equipment is able to receive information in downlink and is able to transmit information in uplink as well. Information transmitted or received by the user equipment node may include various kinds of data and control information. In accordance with types and usages of the information transmitted or received by the user equipment, various physical channels may exist.

The following descriptions are usable for various wireless access systems including CDMA (code division multiple access), FDMA (frequency division multiple access), TDMA (time division multiple access), OFDMA (orthogonal frequency division multiple access), SC-FDMA (single carrier frequency division multiple access) and the like. CDMA can be implemented by such a radio technology as UTRA (universal terrestrial radio access), CDMA 2000 and the like. TDMA can be implemented with such a radio technology as GSM/GPRS/EDGE (Global System for Mobile communications)/General Packet Radio Service/Enhanced Data Rates for GSM Evolution). OFDMA can be implemented with such a radio technology as IEEE 802.11 (Wi-Fi), IEEE 802.16 (WiMAX), IEEE 802.20, E-UTRA (Evolved UTRA), etc. UTRA is a part of UMTS (Universal Mobile Telecommunications System). 3GPP (3rd Generation Partnership Project) LTE (long term evolution) is a part of E-UMTS (Evolved UMTS) that uses E-UTRA. The 3GPP LTE employs OFDMA in DL and SC-FDMA in UL. And, LTE-A (LTE-Advanced) is an evolved version of 3GPP LTE.

Moreover, in the following description, specific terminologies are provided to help the understanding of the present invention. And, the use of the specific terminology can be modified into another form within the scope of the technical idea of the present invention.

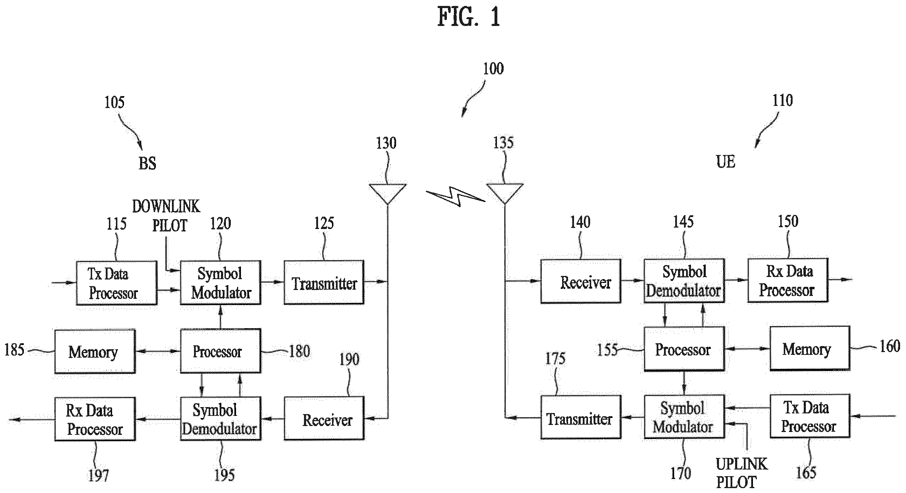

FIG. 1 is a block diagram for configurations of a base station 105 and a user equipment 110 in a wireless communication system 100.

Although one base station 105 and one user equipment 110 (D2D user equipment included) are shown in the drawing to schematically represent a wireless communication system 100, the wireless communication system 100 may include at least one base station and/or at least one user equipment.

Referring to FIG. 1, a base station 105 may include a transmitted (Tx) data processor 115, a symbol modulator 120, a transmitter 125, a transceiving antenna 130, a processor 180, a memory 185, a receiver 190, a symbol demodulator 195 and a received data processor 197. And, a user equipment 110 may include a transmitted (Tx) data processor 165, a symbol modulator 170, a transmitter 175, a transceiving antenna 135, a processor 155, a memory 160, a receiver 140, a symbol demodulator 155 and a received data processor 150. Although the base station/user equipment 105/110 includes one antenna 130/135 in the drawing, each of the base station 105 and the user equipment 110 includes a plurality of antennas. Therefore, each of the base station 105 and the user equipment 110 of the present invention supports an MIMO (multiple input multiple output) system. And, the base station 105 according to the present invention may support both SU-MIMO (single user-MIMO) and MU-MIMO (multi user-MIMO) systems.

In downlink, the transmitted data processor 115 receives traffic data, codes the received traffic data by formatting the received traffic data, interleaves the coded traffic data, modulates (or symbol maps) the interleaved data, and then provides modulated symbols (data symbols). The symbol modulator 120 provides a stream of symbols by receiving and processing the data symbols and pilot symbols.

The symbol modulator 120 multiplexes the data and pilot symbols together and then transmits the multiplexed symbols to the transmitter 125. In doing so, each of the transmitted symbols may include the data symbol, the pilot symbol or a signal value of zero. In each symbol duration, pilot symbols may be contiguously transmitted. In doing so, the pilot symbols may include symbols of frequency division multiplexing (FDM), orthogonal frequency division multiplexing (OFDM), or code division multiplexing (CDM).

The transmitter 125 receives the stream of the symbols, converts the received stream to at least one or more analog signals, additionally adjusts the analog signals (e.g., amplification, filtering, frequency upconverting), and then generates a downlink signal suitable for a transmission on a radio channel. Subsequently, the downlink signal is transmitted to the user equipment via the antenna 130.

In the configuration of the user equipment 110, the receiving antenna 135 receives the downlink signal from the base station and then provides the received signal to the receiver 140. The receiver 140 adjusts the received signal (e.g., filtering, amplification and frequency downconverting), digitizes the adjusted signal, and then obtains samples. The symbol demodulator 145 demodulates the received pilot symbols and then provides them to the processor 155 for channel estimation.

The symbol demodulator 145 receives a frequency response estimated value for downlink from the processor 155, performs data demodulation on the received data symbols, obtains data symbol estimated values (i.e., estimated values of the transmitted data symbols), and then provides the data symbols estimated values to the received (Rx) data processor 150. The received data processor 150 reconstructs the transmitted traffic data by performing demodulation (i.e., symbol demapping, deinterleaving and decoding) on the data symbol estimated values.

The processing by the symbol demodulator 145 and the processing by the received data processor 150 are complementary to the processing by the symbol modulator 120 and the processing by the transmitted data processor 115 in the base station 105, respectively.

In the user equipment 110 in uplink, the transmitted data processor 165 processes the traffic data and then provides data symbols. The symbol modulator 170 receives the data symbols, multiplexes the received data symbols, performs modulation on the multiplexed symbols, and then provides a stream of the symbols to the transmitter 175. The transmitter 175 receives the stream of the symbols, processes the received stream, and generates an uplink signal. This uplink signal is then transmitted to the base station 105 via the antenna 135.

In the base station 105, the uplink signal is received from the user equipment 110 via the antenna 130. The receiver 190 processes the received uplink signal and then obtains samples. Subsequently, the symbol demodulator 195 processes the samples and then provides pilot symbols received in uplink and a data symbol estimated value. The received data processor 197 processes the data symbol estimated value and then reconstructs the traffic data transmitted from the user equipment 110.

The processor 155/180 of the user equipment/base station 110/105 directs operations (e.g., control, adjustment, management, etc.) of the user equipment/base station 110/105. The processor 155/180 may be connected to the memory unit 160/185 configured to store program codes and data. The memory 160/185 is connected to the processor 155/180 to store operating systems, applications and general files.

The processor 155/180 may be called one of a controller, a microcontroller, a microprocessor, a microcomputer and the like. And, the processor 155/180 may be implemented using hardware, firmware, software and/or any combinations thereof. In the implementation by hardware, the processor 155/180 may be provided with such a device configured to implement the present invention as ASICs (application specific integrated circuits), DSPs (digital signal processors), DSPDs (digital signal processing devices), PLDs (programmable logic devices), FPGAs (field programmable gate arrays), and the like.

Meanwhile, in case of implementing the embodiments of the present invention using firmware or software, the firmware or software may be configured to include modules, procedures, and/or functions for performing the above-explained functions or operations of the present invention. And, the firmware or software configured to implement the present invention is loaded in the processor 155/180 or saved in the memory 160/185 to be driven by the processor 155/180.

Layers of a radio protocol between a user equipment/base station and a wireless communication system (network) may be classified into 1st layer L1, 2nd layer L2 and 3rd layer L3 based on 3 lower layers of OSI (open system interconnection) model well known to communication systems. A physical layer belongs to the 1 st layer and provides an information transfer service via a physical channel. RRC (radio resource control) layer belongs to the 3rd layer and provides control radio resourced between UE and network. A user equipment and a base station may be able to exchange RRC messages with each other through a wireless communication network and RRC layers.

In the present specification, although the processor 155/180 of the user equipment/base station performs an operation of processing signals and data except a function for the user equipment/base station 110/105 to receive or transmit a signal, for clarity, the processors 155 and 180 will not be mentioned in the following description specifically. In the following description, the processor 155/180 can be regarded as performing a series of operations such as a data processing and the like except a function of receiving or transmitting a signal without being specially mentioned.

Prior to the description of the present invention, a random access procedure in an LTE system will be briefly described. In the LTE system, random access is used for several purposes as follows.

1) Establishing a radio link through initial access (switch from RRC_IDLE to RRC_CONNECTED).
2) Reestablishing radio link after radio link failure.
3) Acquiring uplink synchronization with a new cell through handover.
4) Acquiring uplink synchronization when uplink or downlink data is reached in a state in which a UE is in an RRC_CONNECTED state but uplink synchronization is not acquired
5) Performing location measurement if a location measurement method based on uplink measurement is used
6) Requesting scheduling if there is no scheduling request resource designated on a physical uplink control channel (PUCCH)

Among the above purposes, acquiring uplink synchronization is most important. When a radio link is initially established, a unique identifier C-RNTI is allocated to a UE in a random access procedure. A random access procedure may include a contention-based method and a contention-free method.

The contention-based random access procedure includes the following four steps.

1. As a first step, a UE transmits a random access preamble such that an eNodeB estimates the transmission timing of the UE. Uplink synchronization is necessary for the UE to send data and the UE cannot transmit uplink data in a state in which uplink synchronization is not acquired.
2. As a second step, a network transmits a timing advance command such that the UE may adjust transmission timing based on timing estimation in the first step. Along with uplink synchronization, in the second step, uplink resources used in a third step of the random access procedure are allocated to the UE.
3. As a third step, the UE transmits identification information thereof to the network and actual transmission is performed using an uplink shared channel (UL-SCH), similarly to general data scheduling. Information included in this signaling is changed according to the state of the UE and, more particularly, depending on whether the UE is previously known to the network.
4. As a fourth step, a contention-resolution message is transmitted from the network to the UE on a downlink shared channel (DL-SCH). This step resolves contention among a plurality of UEs which attempts to access a system using the same random access resources.

Only the first step uses separate physical layer processing specially designed for random access. The remaining three steps use the same physical layer processing as general downlink and uplink data transmission. Contention-free random access may be used only when downlink data is reached, in the case of handover or location measurement or when uplink synchronization is reestablished. In contention-free random access, contention resolution is not necessary and thus only the first and second steps are used.

Analog Beamforming and PRACH subframe structure

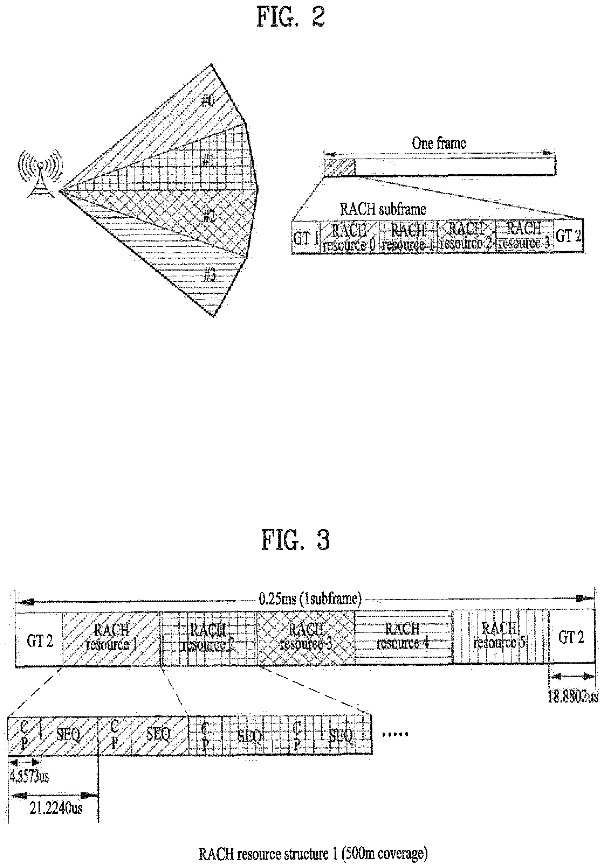

FIG. 2 is a diagram showing the structure of an analog BS Rx beam and a PRACH subframe.

As compared to a band equal to or less than 6 GHz as the band of a legacy cellular communication system, a high frequency band of 6 GHz or more has very high path attenuation and thus requires beamforming technology. In a high frequency band, a gap between antennas is decreased such that a large number of antennas may be mounted in a small area. However, in the case of a digital beamforming scheme of processing all antenna signals using a baseband process, very high hardware complexity is required. For this reason, a hybrid beamforming scheme obtained by combining an analog beamforming scheme and a digital beamforming scheme in order to obtain the advantages of the digital beamforming scheme while reducing hardware complexity is being considered. Therefore, resources which may be used at the same time may be restricted due to the analog beamforming scheme.

FIG. 2 shows the structure of a PRACH subframe divided in the time domain by the analog beam. Referring to FIG. 2, RACH resources corresponding to analog beams of a BS may be individually allocated to the PRACH subframe. For example, RACH resource 0 may be allocated to a beam corresponding to beam index 0 of the BS, for RACH preamble transmission.

In a legacy LTE system, four different RACH preamble formats may be defined, in order to use a preamble suitable for each of the cells having different coverages. Similarly, a cellular communication system of a high frequency band using analog beamforming may have a plurality of RACH structures.

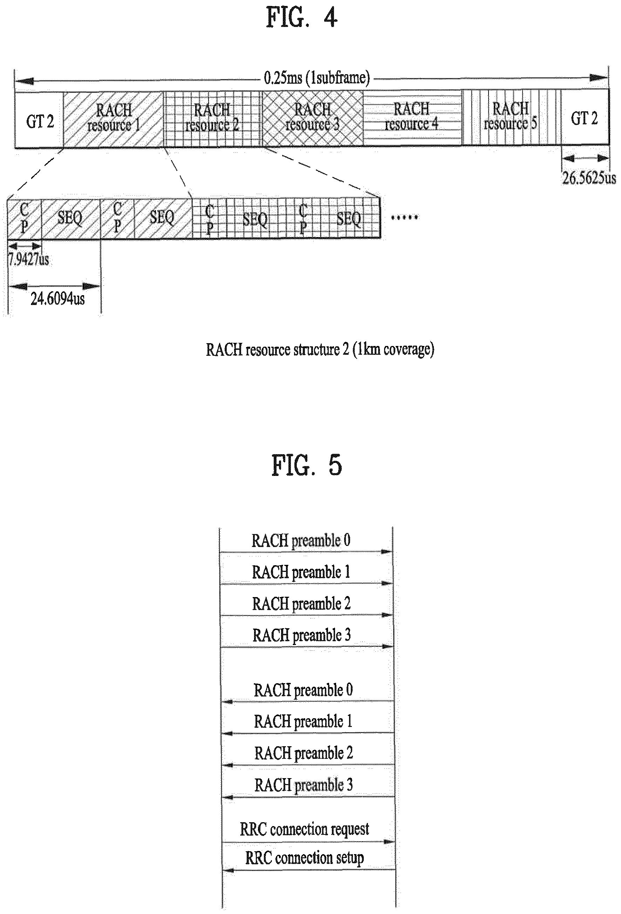

FIGs. 3 and 4 are diagrams showing respective RACH resource structures.

FIG. 3 shows a RACH resource structure in the case of 500-m coverage, and FIG. 4 shows a RACH resource structure in the case of 1-km coverage. Each RACH resource includes a cyclic prefix (CP) and a sequence (SEQ) as shown in FIGs. 3 and 4. It can be seen that, if coverage is large, the lengths of the CP and the SEQ are increased.

FIG. 5 is a diagram showing a RACH procedure for analog BS Rx beam sweeping.

A basic RACH procedure composed of RACH resources is as follows. A UE transmits RACH preamble 0, RACH preamble 1, RACH preamble 2 and RACH preamble 3 to a BS and receives RACH response 0, RACH response 1, RACH response 2 and RACH response 3 in response thereto. Thereafter, the UE transmits a message for an RRC connect request to the BS and receives a message including RRC connection setup information from the BS. A best UE Tx/BS Rx beam pair for uplink (UL) resources may be determined after the UE receives the RACH response to a last RACH resource from the BS.

UL resource allocation by SR and BSR

From the viewpoint of LTE, a buffer status report (BSR) is a parameter indicating how much data to be transmitted is present in the buffer of the UE as control request information configured in a Medium Access Control-Control Element (MAC-CE). Accordingly, when the UE reports the BSR, the BS provides UL grant to the UE to efficiently allocate UL resources to the UE. The BSR includes two types of BSRs, such as a short BSR and a long BSR.

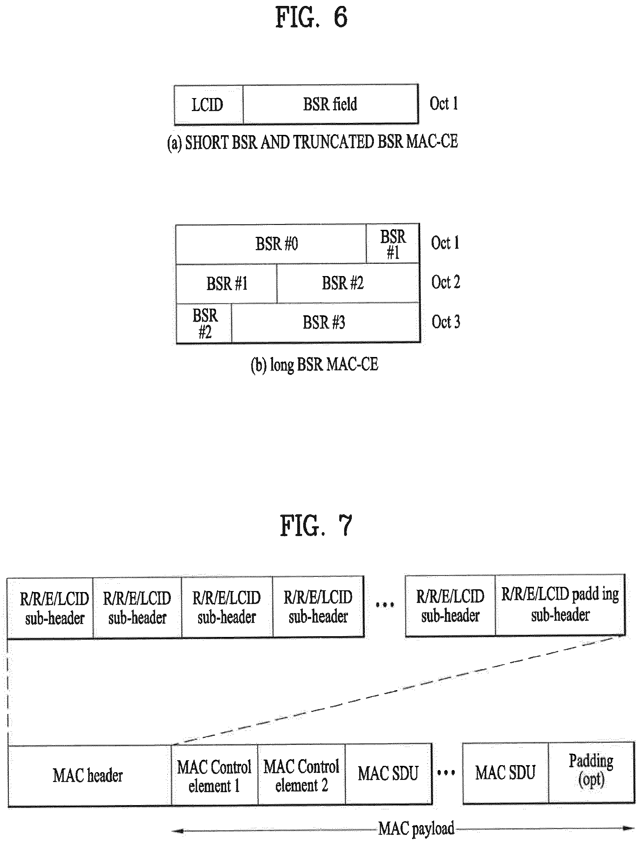

FIG. 6 is a diagram showing a BSR type in a MAC-CE.

Logical channel identifiers (LCIDs) are indices indicating the properties of data in the MAC CE in addition to such a BSR type and are combined to form a logical channel group (LCG) ID. A short BSR is used to report a BSR for a specific LCID and a long BSR is used to collectively report BSRs for LCIDs. This BSR field is expressed using 6 bits and 0 to 63 types of BSRs may be reported.

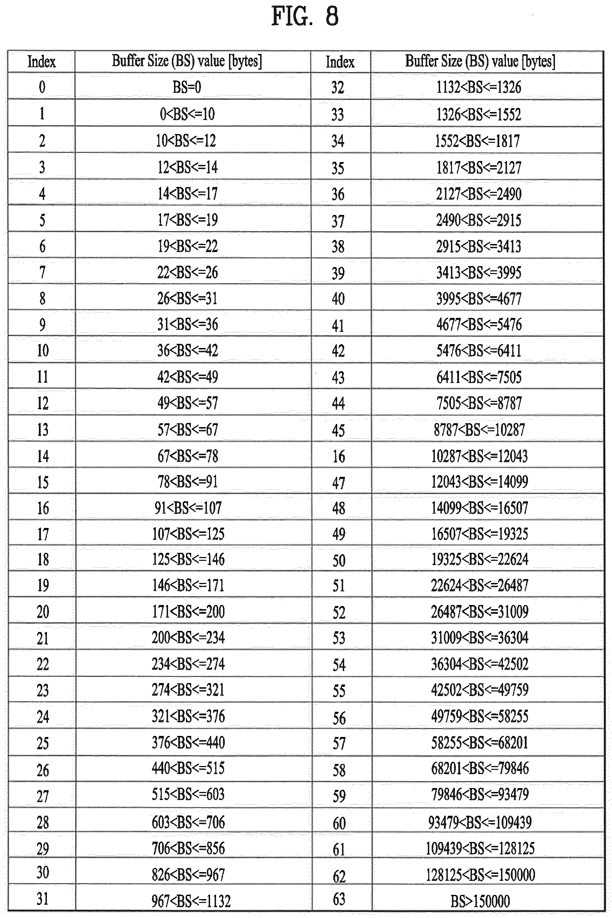

FIG. 7 is a diagram showing the configuration of a MAC header and a MAC payload, and FIG. 8 is a diagram showing a BSR index and a buffer size table.

The MAC header includes a plurality of MAC subheaders and the MAC payload includes an MCE CE, a MAC SDU, etc.

The BSR is transmitted from the UE to the BS in the following cases.

1) When the UE has data to be transmitted to the eNB
2) When UL grant is received from the BS but the amount of data to be transmitted is larger than the amount of data allocated in the UL grant or when UL grant is received but there is no data to be transmitted (all BSR indices of the MAC-CE is set to 0)
3) When a retxBSR-Timer expires and the UE has data to be transmitted
4) When a periodicBSR-Timer expires

As a method of requesting UL resource allocation, the UE transmits a scheduling request (SR) to the BS. Transmission of the SR is transmission of 1 bit using on-off keying and the SR may be piggybacked and transmitted on a PUCCH or a PUSCH.

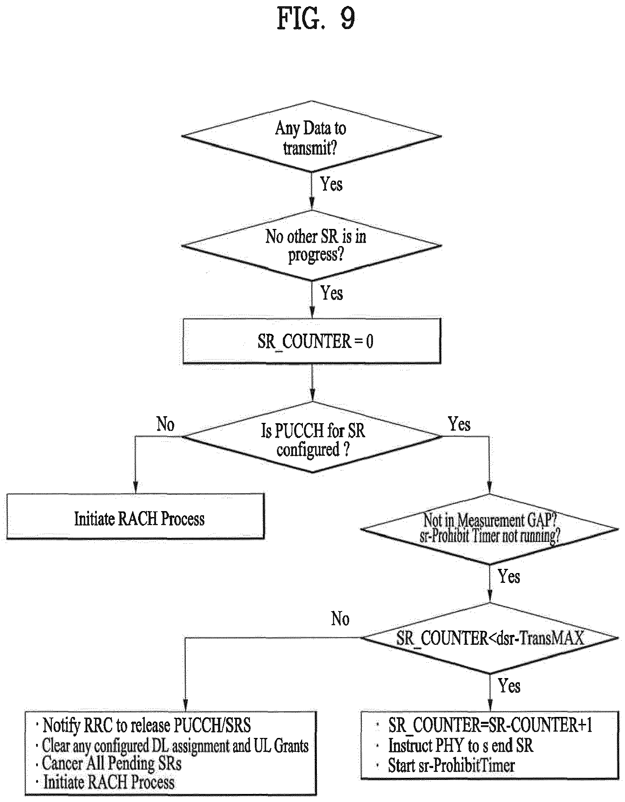

FIG. 9 is a diagram illustrating an SR procedure.

When the UE has data to be transmitted to the BS, whether another SR is in progress is determined. When there is no SR in progress, an SR_Counter value is 0. If a PUCCH for an SR is not configured, the UE starts a RACH procedure. In contrast, if a PUCCH for an SR is configured and an SR-Prohibit timer does not run, the SR_Counter value increases by 1.

At this time, the SR_Counter value increases by 1 only when the SR_Counter value is less than a predetermined maximum counter value. After the SR_Counter value increases by 1, the UE transmits an SR and starts an SR-Prohibit timer. In contrast, when the SR-Prohibit timer value is not less than the predetermined maximum counter value, PUCCH/SRS release is notified, all pending SRSs are canceled or a RACH process is initiated.

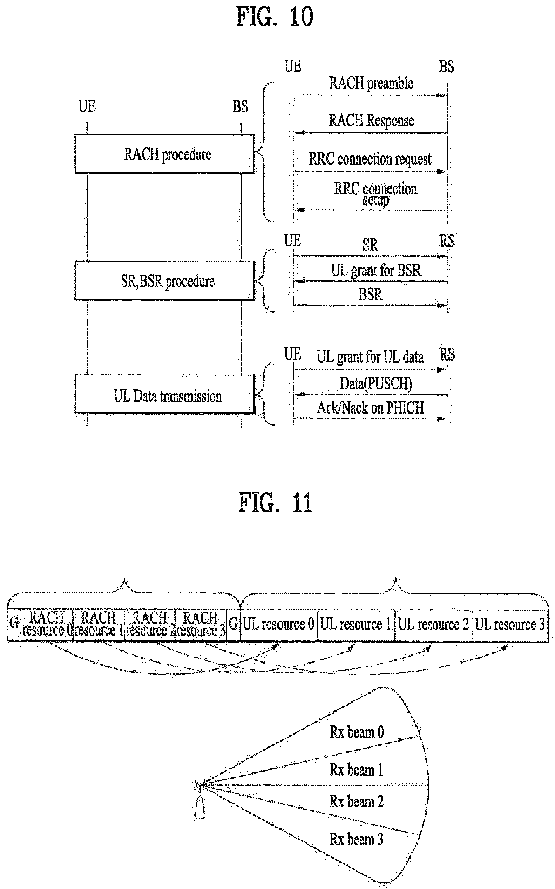

FIG. 10 is a diagram showing a RACH transmission procedure of a UE in an idle mode and a UL resource allocation procedure including an SR and a BSR.

FIG. 10 shows a procedure from UL initial access to UL resource allocation (idle -> RRC connected). As described above, the RACH procedure may include a RACH preamble transmission step, a RACH response reception step, a step of transmitting a message including an RRC connection request and a step of receiving a message including RRC connection setup information. An SR procedure may include, at a UE, transmitting an SR, receiving UL grant for a BSR from a BS and transmitting the BSR. UL Data transmission procedure may include, at a UE, receiving UL for UL data, transmitting data and receiving ACK/NACK on a PHICH.

If RACH preambles are transmitted using RACH resources corresponding to BS Rx beams as shown in FIGs. 2 to 4, UL resources corresponding to Rx analog beams of the BS may be highly likely to be subjected to TDM or FDM.

FIG. 11 is a diagram showing the basic structure (TDD) of UL resources according to analog Rx beams of a BS.

When UL resources are allocated according to the analog Rx beams of the BS as shown in FIG. 11, each UE may configure resource allocation for a specific purpose (for the purpose of transmitting UL data, attenuating interference upon configuring the Rx beams of the BS, etc.) without ambiguity. That is, as shown in FIG. 11, if analog beams are formed of 4 BS Rx beams, UL resource allocation configuration in which RACH resource 0 corresponding to Rx beam 0 are associated with UL resource index 0 corresponding to RACH resource 0 is necessary. Of course, the SR and RACH configuration procedures may be divided to configure UL resources corresponding to the Rx beams of the BS.

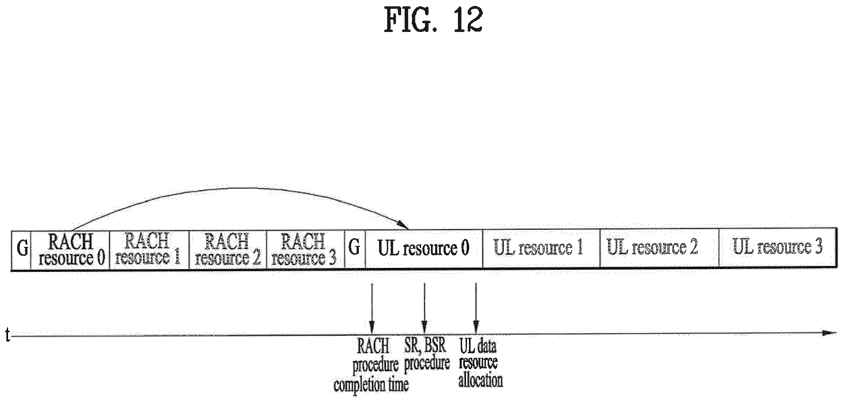

FIG. 12 is a diagram showing UL resource allocation corresponding to analog Rx beam 0 ofaBS.

FIG. 12 shows timings of a RACH procedure, an SR procedure and a UL data transmission procedure based on BS Rx beam 0. If a RACH preamble is detected from RACH resource 0 corresponding to BS Rx beam 0 and UL synchronization is completed, the UE performs the SR procedure in UL resource 0 corresponding to RACH resource 0 and UL data of the UE is transmitted toward BS Rx beam 0 of the BS in UL resource 0 according to the SR. However, in this case, several problems may occur in the structure.

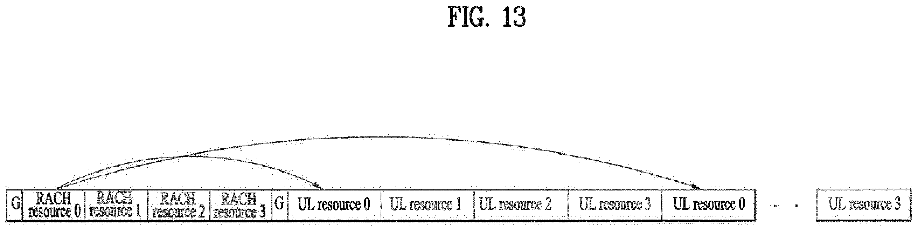

FIG. 13 is a diagram illustrating possibility of UL transmission delay corresponding to analog Rx beam 0 of a BS.

If the amount of UL data of the UE exceeds the UL resource transmission capabilities of the UE, the remaining data transmission may be delayed to a next UL resource period from the viewpoint of the bps of UL data, thereby deteriorating performance. In addition, if UL data is retransmitted (the UEs receive NACK through PHICHs) and the data gets out of the UL resource region for the Rx beam of the BS, to which the data was transmitted, retransmission may be delayed to a next UL resource region.

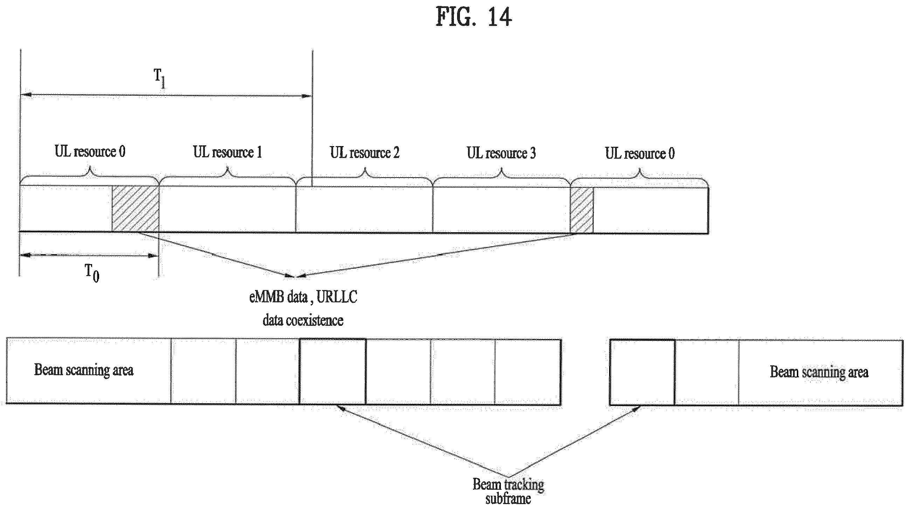

FIG. 14 is a diagram showing the case where service requirements are not satisfied.

In NR, flexible resource allocation needs to be supported because one UE simultaneously transmits data having a variety of qualities of service (QoS) (e.g., eMMB, mMTC, ultra reliability and low latency connection (URLLC). In the structure shown in FIG. 14, a ULRRC service requirement is not satisfied but an eMMB service requirement is satisfied.

For example, when UL data having a URLLC requirement and UL data having an eMMB requirement coexist in one UE, if a UL resource allocation length is $\tau_m$, $m = 0,...,M$-1 and a ULRRC propagation latency requirement is $T_l$ propagation latency, a target data rate as an eMMB requirement is satisfied in the resource allocation structure of FIG. 14 but the URLLC requirement cannot be satisfied.

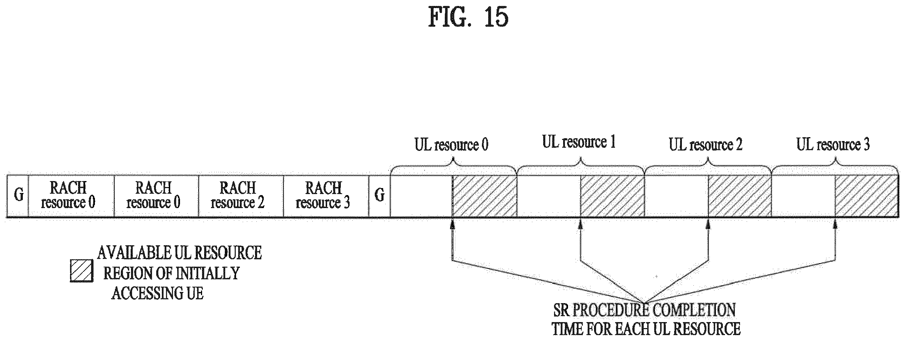

FIG. 15 is a diagram illustrating efficiency of UL resource allocation according to an SR procedure of UL initial accessing UEs.

If an SR procedure is performed after UL initial access without restriction on use of each UL resource according to the demand of a UE, each UL resource cannot be used until the SR procedure is finished. In each UL resource shown in FIG. 15, UL resources may be used after the SR procedure is finished. Of course, although UEs in the RRC connected state may use the resources, when UEs in RRC_idle state use the resources, UL resource utilization may be decreased. Hereinafter, a method of solving the problem that UL resource utilization is decreased will be proposed.

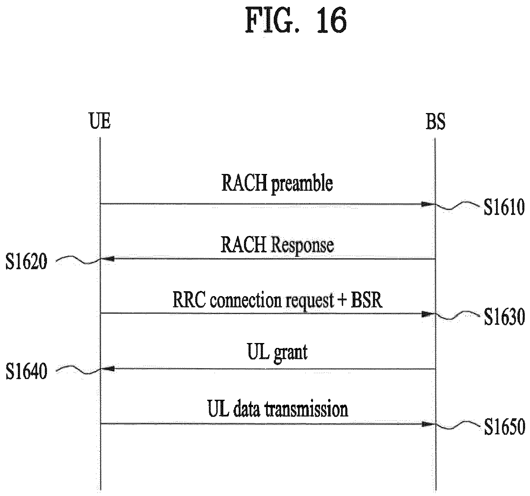

FIG. 16 is a diagram showing a random access procedure procedure according to the present invention. For purposes of illustration only, the random access procedure is presented as a RACH procedure in the following. It will be understood that the principles set out in the following may be applied with any random access procedure and is not limited to a RACH procedure in particular.

Referring to FIG. 16, a UE transmits a RACH preamble to a BS (S1610) and receives a RACH response from the BS in response to the RACH preamble (S1620). The UE may transmit a message (message 3) for requesting a BSR to the BS along with an RRC connection request (S1630). That is, the UE may request resources for the RRC connection request and resources for the BSR in message 3. Thereafter, the UE receives UL grant from the BS (S1640) and transmits UL data in resources indicated by the UL grant (S1650).

In the step of transmitting RACH MSG 3 (message 3), a RACH preamble for requesting simultaneous transmission of the RRC connection request and the BSR is designed. The RACH preamble for requesting transmission of the RRC connection request and the BSR is designed to maintain orthogonality with a legacy RACH preamble using a

RACH preamble $\alpha_{k,l}^{(p),RACH}$, a group number u influencing a Zadoff-Chu (ZC) sequence root value, a sequence hopping number v, etc.

The BS, which has received the RACH preamble, may include an ACK/NACK signal indicating whether the RACH preamble has been received in a RACH response and transmit the ACK/NACK signal to the UE. Through RRC signaling or downlink control information (DCI), the BS may configure simultaneous transmission of the RRC connection request and the BSR in the RACH MSG 3 transmission step in advance upon RACH transmission of the UE. That is, through RRC signaling or DCI, resources may be allocated such that the RRC connection request and the BSR are simultaneously transmitted.

For example, a new RACH preamble which maintains preamble orthogonality by configuring $q(\xi) \equiv q(u, v, \xi)$ using the group number u and the sequence hopping numbers v and $\xi$ may be designed as shown in Equation 1 below.

[Equation 1]

$$x_q(m) = e^{-j\frac{\pi q(\xi)m(m+1)}{N_{ZC}^{RACH}}}$$

$$\xi = \begin{cases} 1, RRC\_connection\_request + BSR \\ 0, only\_RRC\_connection\_request \end{cases}$$

As an example, in Equation 1 above, the UE and the BS may predetermine and share that the RACH preamble is only for the RRC connection request if the value $\xi$ applied to the RACH preamble sequence is 0 and the RACH preamble is for simultaneous transmission of the RRC connection request and the BSR if the value $\xi$ is 1, upon RACH preamble transmission. In contrast, the UE and the BS may predetermine and share that the RACH preamble is for simultaneous transmission of the RRC connection request and the BSR if the value $\xi$ is 0 and the RACH preamble is only for the RRC connection request if the value $\xi$ is 1.

The BS may determine whether the RACH preamble transmitted by the UE is a RACH preamble for only the RRC connection request or a RACH preamble for requesting simultaneous transmission of the RRC connection request and the BSR, based on the value $\xi$ applied to the RACH preamble sequence.

As described above, message 3 is transmitted on a UL-SCH. A new BSR for selecting UL resources is configured such that the RRC connection request and the BSR are simultaneously transmitted in the RACH MSG transmission (message 3 transmission) step. Table 1 below shows LCID values for a UL-SCH.

[Table 1]

| Index | LCID values |
|---|---|
| 00000 | CCCH |
| 00001-01010 | Identity of the logical channel |
| 01011 | CCCH |
| 01100-10110 | Reserved |
| 10111 | Each UL resource enabling |
| 11000 | Dual Connectivity Power Headroom Report |
| 11001 | Extended Power Headroom Report |
| 11010 | Power Headroom Report |
| 11011 | C-RNTI |
| 11100 | Truncated BSR |
| 11101 | Short BSR |
| 11110 | Long BSR |

As shown in Table 1, a specific LCID index among LCID reserving indices is used as a field enabling transmission of the RRC connection request and the BSR upon RACH MSG transmission (message 3 transmission).

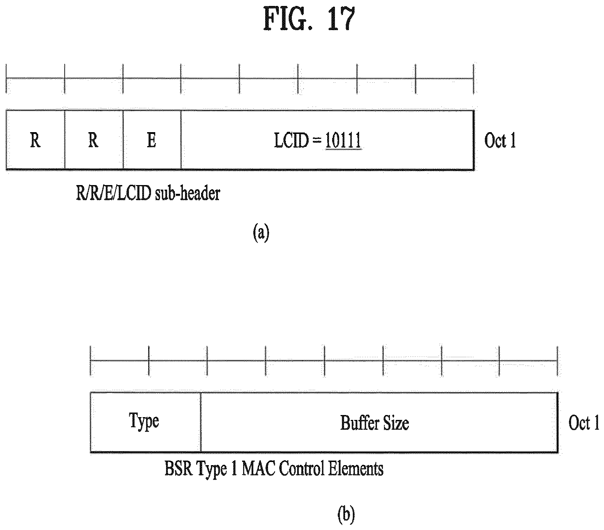

FIG. 17 is a diagram illustrating an LCID and BSR configuration for configuring simultaneous transmission of a BSR and an RRC connection request.

As shown in (a) of FIG. 17, the UE may configure, for example, an LCID value with an index "10111" in the MAC header to indicate that simultaneous transmission of the RRC connection request and the BSR is requested. In this example, by configuring the LCID value with the index "10111" in the MAC header, the LCID may be omitted in the MAC-CE and the total amount of data to be transmitted by the UEs having this LCID index may be included in the BSR. Accordingly, the UE may also transmit the BSR upon the RRC connection request.

In the example of (b) of FIG. 17, a type may be used as a BSR type allocated to each UL resource, that is, information capable of obtaining the features of data used for UL resources corresponding to Rx beams of the BS.

Next, an example of configuring a UL data type as a BSR type will be described. Table 2 shows a MAC-CE BSR type for a UL-SCH.

[Table 2]

| Type | data application for UL resources |
|---|---|
| 000 | Sole data for only best BS Rx beam |
| 001 | Best BS Rx beam: high proirity for new UL data Second best BS Rx beam: UL data for retransmission |
| 010 | Best BS Rx beam: UL data for retransmission Second best BS Rx beam: high proirity for new UL data |
| 011 | First/second best BS Rx beam: dual transmission for both Rx beams |
| 100~111 | Reserved |

The BS transmits, to the UE, UL grant indicating a resource allocation location of data to be transmitted by the UE (including buffered new data and buffered retransmission data) in message 4 (RACH MSG 4) including information on RRC connection setup. This UL grant needs to be configured to allocate multiple UL resources according to a determined BSR type.

For example, the UE may transmit a BSR type with a BSR type index (e.g., "001") in Table 2 above. Based on the BSR type received from the UE, if the BS transmits, to the UE, UL grant for resources corresponding to a best Rx beam/second best Rx beam of the BS along with an RRC connection setup message (message 4), the UL grant of the UL resource corresponding to the best BS Rx beam and the UL grant of the UL resource corresponding to the second BS Rx beam need to be included and transmitted in the RRC connection setup message (message 4).

The BS may determine the size of the UL grant transmitted along with RACH MSG 4 of the last RACH resource in consideration of the BSR type and determine UL grant information such as each resource allocation region, modulation and coding scheme (MCS) or redundancy version (RV).

In Table 2 above, for example, if the index of the BSR type transmitted by the UE is "000", the BS transmits UL grant for allocation of UL resources for only the best BS Rx beam. If the index of the BSR type is "001", a UL grant format (new DCI 0 format) for using UL resources corresponding to the best BS/Rx beam/second best BS Rx beam is necessary. For resource block (RBs) assignment, MCS and RV for the UL resources corresponding to the two beams may be differently configured.

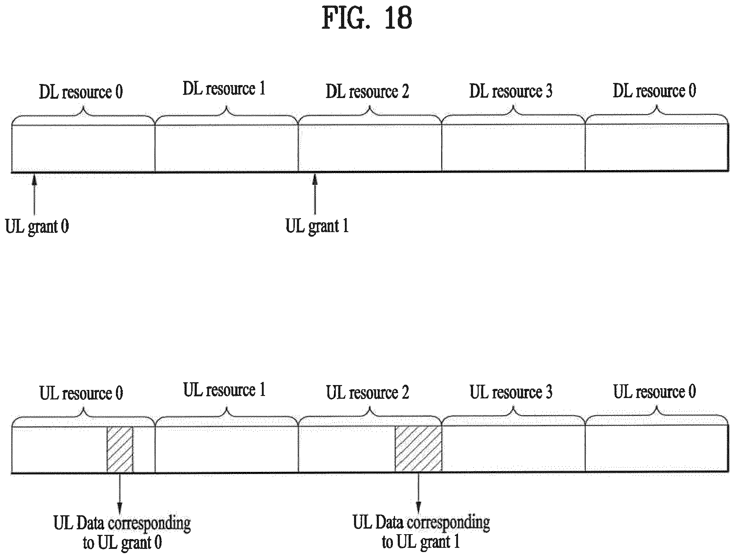

FIG. 18 is a diagram showing UL grant corresponding to each UL resource (UL resource 0 and UL resource 2 are used according to BSR type).

UL grant for each UL resource is transmitted in RACH MSG4 and the UE may transmit UL data in each UL resource region according to the determined BSR type. In general, UL grant needs to be independently transmitted according to UL resources to be used. That is, UL grant is increased according to the number of UL resources to be used and UL data is transmitted in each UL resource region.

If the proposed BSR size is greater than transmission capacity of UL resources, data is split and the split information is provided to UL grant and the UE transmits the split data using the split UL resources. At this time, information or fields to be included in UL grant are as follows.

(1) Flag for split resource: 1-bit flag confirming whether the data of the BSR requested in a RACH Response is split.
(2) RB assignment per UL resource: Size of the RB assigned per split UL resource. M is a capacity indicated by a BSR, and N is a total capacity capable of being assigned to the UL resource, that is, $M = M_{BSR0} + M_{BSR1}$ (split data capacities $M_{BSR0}$ and $M_{BSR0}$ in the case of M>N). $M_{BSR0}$ is the amount of data assigned to a first resource among UL resources and $M_{BSR1}$ is the amount of data assigned to a second resource of UL resources. For example, if the BSR size of the UE is 20000 bytes and may be allocated for UL transmission but only 15000 bytes are sent due to restriction on UL resource capacity, data is split into data $M_{BSR0}$ for 15000 bytes and data $M_{BSR1}$ for 5000 bytes and the BS may include and transmit, to the UE, indicators for $M_{BSR0}$ and $M_{BSR1}$ and RBs for $M_{BSR0}$ and $M_{BSR1}$ in UL grant.

(3) SN for split resource: Field indicating a sequence number for split. Upon BSR transmission, the sequence number (SN) of the data is already included in the MAC header and thus does not need to be reported upon UL grant transmission. However, since the data is split, the BS notifies the UE of the sequence of the split data, thereby eliminating ambiguity upon UL resource assignment to the UE. For example, upon splitting data into two pieces of data, first data is set to 0 and second data is set to 1. According to the number of pieces of split data, the size of the SN information may be increased. Table 3 below includes three types of information as DCI format 0 (UL grant) for UL resource.

[Table 3]

| DCI format 0(UL grant) for UL resource | Length (LTE) | Length Ex per UL resource |
|---|---|---|
| Flag for format 0/format 1A | 1 | 1 |
| Hopping flag | 1 | 1 |
| N_ULhop | 1 (1.4 Mhz)<br>1 (3 Mhz)<br>1 (5 Mhz)<br>2 (10 Mhz)<br>2 (15 Mhz)<br>2 (20 Mhz) | 1 ($B_0$ Mhz)<br>1 ($B_1$ Mhz)<br>1 ($B_2$ Mhz)<br>2 ($B_3$ Mhz)<br>2 ($B_4$ Mhz)<br>2 ($B_5$ Mhz) |
| RB assignment | 5 (1.4 Mhz)<br>7 (3 Mhz)<br>7 (5 Mhz)<br>11 (10 Mhz)<br>12 (15 Mhz)<br>13 (20 Mhz) | 5 ($B_0$ Mhz)<br>7 ($B_1$ Mhz)<br>7 ($B_2$ Mhz)<br>11 ($B_3$ Mhz)<br>12 ($B_4$ Mhz)<br>13 ($B_5$ Mhz) |
| MCS and RV | 5 | 5 |
| NDI(New Data Indicator) | 1 | 1 |
| TPC for PUSCH | 2 | 2 |
| Cyclic shift for DM RS | 3 | 3 |
| UL index (TDD only) | 2 | 2 |
| Downlink Assignment Index (DAI) | 2 | 2 |
| CQI request | 1 | 1 |
| **Flag for splited resource** | **X** | **1** |
| **RB assignment per UL resource** | **X** | **Reference to RB assingment term** |
| **SN for splited resource** | **X** | **Dependent on how many the resource are splited into** |

The UE acquires information about whether data is split and transmitted based on the UL grant shown in Table 3, RB assignment information per split resource and information about the sequence number for split resource and performs operation according to information indicated in the UL grant.

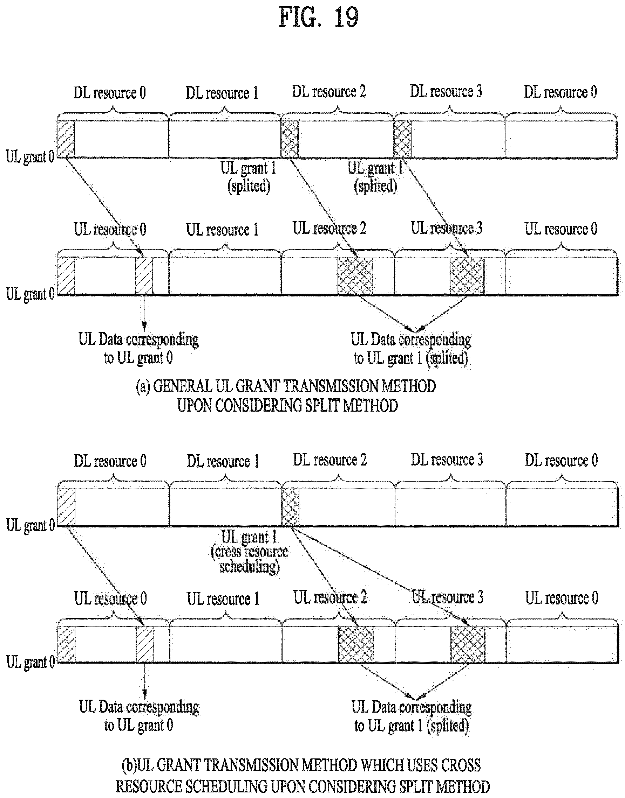

FIG. 19 is a diagram illustrating a general UL grant transmission method upon considering a split method and a UL grant transmission method in which cross resource scheduling is applied upon considering a split method.

(a) of FIG. 19 shows the general UL grant transmission method upon the split method and (b) of FIG. 19 shows the UL grant transmission in which cross resource scheduling is applied upon a split method. The BS may split and transmit UL grant for UL resource per UL resource or support cross resource scheduling.

Referring to (a) of FIG. 19, UL grant 0 indicates the UL grant, UL grant 1 is split and transmitted in different DL resources (e.g., DL resource 1 and DL resource 2), and UL grant 1 may indicate split UL resources (resource in UL resource 2 and resource in UL resource 3).

As shown in (b) of FIG. 19, if cross resource scheduling is considered upon transmitting the split UL grant, information on UL resource on which split data is transmitted in another UL resource region (e.g., MCS, RV, resource transmission location information, etc.) may be included in UL grant information. That is, information on UL resource on which split data is transmitted in another UL resource region (resource assignment in UL resource 2 and resource assignment in UL resource 3) may be included in UL grant 1.

As described above, the present invention proposes various resource allocation procedures and methods for efficiently utilizing UL resources according to a RACH transmission procedure for analog BS Rx beams.

The aforementioned embodiments are achieved by combination of structural elements and features of the present invention in a predetermined manner. Each of the structural elements or features should be considered selectively unless specified separately. Each of the structural elements or features may be carried out without being combined with other structural elements or features. In addition, some structural elements and/or features may be combined with one another to constitute the embodiments of the present invention. The order of operations described in the embodiments of the present invention may be changed. Some structural elements or features of one embodiment may be included in another embodiment, or may be replaced with corresponding structural elements or features of another embodiment. Moreover, it will be apparent that some claims referring to specific claims may be combined with other claims referring to the other claims other than the specific claims to constitute the embodiment or add new claims by means of amendment after the application is filed.

Those skilled in the art will appreciate that the present invention may be carried out in other specific ways than those set forth herein without departing from the scope of the present invention. The above exemplary embodiments are therefore to be construed in all aspects as illustrative and not restrictive. The scope of the invention should be determined by the appended claims and their legal equivalents, not by the above description, and all changes coming within the meaning and equivalency range of the appended claims are intended to be embraced therein.

[Industrial Applicability]

A method of performing a RACH procedure in a wireless communication system and a communication apparatus therefor are applicable to various wireless communication systems such as a 3GPP LTE/LTE-A system and a 5G communication system.

**Claims**

1. A method for performing a random access procedure by a user equipment, UE, (110) in a wireless communication system (100), the method comprising:

   transmitting (S1610) a random access preamble, the random access preamble indicating whether transmission of a radio resource control, RRC, connection request is requested or transmission of the RRC connection request together with a buffer status report, BSR, is requested in the random access procedure; and
   receiving (S1620) a random access response in response to the random access preamble, the random access response including uplink resource allocation information,
   wherein an uplink resource included in the uplink resource allocation information is assigned based on the random access preamble.

2. The method according to claim 1, further comprising:

   transmitting (S1630) a message including the RRC connection request and the BSR based on the random access response.

3. The method according to claim 2,
   wherein the message includes a MAC subheader, and an index of a logical channel identifier, LCID, is set to a specific value in the MAC subheader to indicate that the RRC connection request and the BSR are transmitted in the message.

4. The method according to claim 3,
   wherein the message includes a BSR Medium Access Control-Control Element, MAC CE, and
   wherein, when the index of the LCID is set to the specific value, an uplink data transmission type is indicated by a type index of the BSR in the BSR MAC CE.

**5.** The method according to claim 2 or 3,
wherein the message includes a BSR MAC CE, the BSR MAC CE including buffer size information indicating an amount of data to be transmitted by the UE (110), and wherein the method further comprises:

in response to the message, receiving (S1640) a message including:

uplink control information including RRC connection setup information; and
resource allocation information for the amount of data to be transmitted by the UE (110).

**6.** The method according to claim 5,
wherein the uplink control information includes a location of a resource allocated for the amount of data to be transmitted by the UE (110), a modulation and coding scheme, MCS, to be applied for data transmission, or redundancy version, RV, information.

**7.** The method according to claim 5 or 6, further comprising:

transmitting (S1650) uplink data on an uplink resource region indicated by the uplink control information.

**8.** The method according to any one of claims 5 to 7,
wherein the uplink control information includes a first field indicating whether the UE (110) splits and transmits data based on the amount of data to be transmitted by the UE (110).

**9.** The method according to claim 8,
wherein, when the first field indicates that the UE (110) splits and transmits the data, the uplink control information further includes the resource assignment information per split data, and/or
wherein, when the first field indicates that the UE (110) splits and transmits the data, the uplink control information further includes information regarding a sequence number of split data.

**10.** The method according to any one of claims 5 to 9,
wherein the uplink control information includes UL grant.

**11.** The method according to any one of claims 1 to 10,
wherein indicating whether transmission of a RRC connection request is requested or transmission of a RRC connection request together with a BSR, is requested in the random access procedure is determined by a sequence hopping number applied to a random access preamble sequence for the random access preamble.

**12.** The method according to any one of claims 3 to 11,
wherein the specific value set as the index of the LCID is "10111".

**13.** The method according to any one of claim 4 to 12,
wherein the uplink data transmission type includes information regarding a reception beam of a base station, BS, (105) corresponding to uplink data for retransmission or uplink data for new transmission.

**14.** The method according to any one of claims 1 to 13, wherein the random access procedure is a RACH procedure, wherein the random access preamble is a RACH preamble, and wherein the random access response is a RACH response.

**15.** A user equipment, UE, (110) in a wireless communication system (100) comprising at least one processor and at least one memory, the at least one memory containing instructions executable by the at least one processor such that the UE is operable to perform the method as claimed in any one of the foregoing claims.


**Amended claims in accordance with Rule 137(2) EPC.**

**1.** A method for performing a random access procedure by a user equipment, UE, (110) in a wireless communication system (100), the method comprising:

transmitting (S1610) a random access preamble, the random access preamble indicating a request for simultaneous transmission of a radio resource control, RRC, connection request and a buffer status report, BSR; and
receiving (S1620) a random access response in response to the random access preamble, the random access response including uplink resource allocation information,
wherein an uplink resource included in the uplink resource allocation information is assigned based on the random access preamble, and
wherein the random access preamble is included in message 1, MSG 1, of random access procedures.

2. The method according to claim 1, further comprising:

transmitting (S1630) a message including the RRC connection request and the BSR based on the random access response.

3. The method according to claim 2,
wherein the message includes a MAC subheader, and an index of a logical channel identifier, LCID, is set to a specific value in the MAC subheader to indicate that the RRC connection request and the BSR are transmitted in the message.

4. The method according to claim 3,
wherein the message includes a BSR Medium Access Control-Control Element, MAC CE, and
wherein, when the index of the LCID is set to the specific value, an uplink data transmission type is indicated by a type index of the BSR in the BSR MAC CE.

5. The method according to claim 2 or 3,
wherein the message includes a BSR MAC CE, the BSR MAC CE including buffer size information indicating an amount of data to be transmitted by the UE (110), and wherein the method further comprises:

in response to the message, receiving (S1640) a message including:

uplink control information including RRC connection setup information; and
resource allocation information for the amount of data to be transmitted by the UE (110).

6. The method according to claim 5,
wherein the uplink control information includes a location of a resource allocated for the amount of data to be transmitted by the UE (110), a modulation and coding scheme, MCS, to be applied for data transmission, or redundancy version, RV, information.

7. The method according to claim 5 or 6, further comprising:

transmitting (S1650) uplink data on an uplink resource region indicated by the uplink control information.

8. The method according to claim 5 or claim 6,
wherein the uplink control information includes a first field indicating whether the UE (110) splits and transmits data based on the amount of data to be transmitted by the UE (110).

9. The method according to claim 8,
wherein, when the first field indicates that the UE (110) splits and transmits the data, the uplink control information further includes the resource assignment information per split data, and/or
wherein, when the first field indicates that the UE (110) splits and transmits the data, the uplink control information further includes information regarding a sequence number of split data.

10. The method according to any one of claims 5 to 6,
wherein the uplink control information includes UL grant.

11. The method according to any one of claims 1 to 10,
wherein indicating the request for simultaneous transmission of the RRC connection request and the BSR is determined by a sequence hopping number applied to a random access preamble sequence for the random access preamble.

**12.** The method according to claim 3,
wherein the specific value set as the index of the LCID is "10111".

**13.** The method according to claim 4,
wherein the uplink data transmission type includes information regarding a reception beam of a base station, BS, (105) corresponding to uplink data for retransmission or uplink data for new transmission.

**14.** The method according to any one of claims 1 to 12, wherein the random access preamble is transmitted on a random access resource corresponding to a reception, Rx, beam of a base station (105).

**15.** A user equipment, UE, (110) for use in a wireless communication system (100) comprising at least one processor and at least one memory, the at least one memory containing instructions executable by the at least one processor such that the UE is operable to perform the method as claimed in any one of the foregoing claims.

# FIG. 1

# FIG. 2

# FIG. 3

RACH resource structure 1 (500m coverage)

# FIG. 4

RACH resource structure 2 (1km coverage)

# FIG. 5

# FIG. 6

| LCID | BSR field | Oct 1 |
|---|---|---|

(a) SHORT BSR AND TRUNCATED BSR MAC-CE

| BSR #0 | | BSR #1 | Oct 1 |
|---|---|---|---|
| BSR #1 | BSR #2 | | Oct 2 |
| BSR #2 | BSR #3 | | Oct 3 |

(b) long BSR MAC-CE

# FIG. 7

| R/R/E/LCID sub-header | R/R/E/LCID sub-header | R/R/E/LCID sub-header | R/R/E/LCID sub-header | ··· | R/R/E/LCID sub-header | R/R/E/LCID padd ing sub-header |
|---|---|---|---|---|---|---|

| MAC header | MAC Control element 1 | MAC Control element 2 | MAC SDU | ··· | MAC SDU | Padding (opt) |
|---|---|---|---|---|---|---|

←————————————— MAC payload —————————————→

## FIG. 8

| Index | Buffer Size (BS) value [bytes] | Index | Buffer Size (BS) value [bytes] |
|---|---|---|---|
| 0 | BS=0 | 32 | 1132<BS<=1326 |
| 1 | 0<BS<=10 | 33 | 1326<BS<=1552 |
| 2 | 10<BS<=12 | 34 | 1552<BS<=1817 |
| 3 | 12<BS<=14 | 35 | 1817<BS<=2127 |
| 4 | 14<BS<=17 | 36 | 2127<BS<=2490 |
| 5 | 17<BS<=19 | 37 | 2490<BS<=2915 |
| 6 | 19<BS<=22 | 38 | 2915<BS<=3413 |
| 7 | 22<BS<=26 | 39 | 3413<BS<=3995 |
| 8 | 26<BS<=31 | 40 | 3995<BS<=4677 |
| 9 | 31<BS<=36 | 41 | 4677<BS<=5476 |
| 10 | 36<BS<=42 | 42 | 5476<BS<=6411 |
| 11 | 42<BS<=49 | 43 | 6411<BS<=7505 |
| 12 | 49<BS<=57 | 44 | 7505<BS<=8787 |
| 13 | 57<BS<=67 | 45 | 8787<BS<=10287 |
| 14 | 67<BS<=78 | 16 | 10287<BS<=12043 |
| 15 | 78<BS<=91 | 47 | 12043<BS<=14099 |
| 16 | 91<BS<=107 | 48 | 14099<BS<=16507 |
| 17 | 107<BS<=125 | 49 | 16507<BS<=19325 |
| 18 | 125<BS<=146 | 50 | 19325<BS<=22624 |
| 19 | 146<BS<=171 | 51 | 22624<BS<=26487 |
| 20 | 171<BS<=200 | 52 | 26487<BS<=31009 |
| 21 | 200<BS<=234 | 53 | 31009<BS<=36304 |
| 22 | 234<BS<=274 | 54 | 36304<BS<=42502 |
| 23 | 274<BS<=321 | 55 | 42502<BS<=49759 |
| 24 | 321<BS<=376 | 56 | 49759<BS<=58255 |
| 25 | 376<BS<=440 | 57 | 58255<BS<=68201 |
| 26 | 440<BS<=515 | 58 | 68201<BS<=79846 |
| 27 | 515<BS<=603 | 59 | 79846<BS<=93479 |
| 28 | 603<BS<=706 | 60 | 93479<BS<=109439 |
| 29 | 706<BS<=856 | 61 | 109439<BS<=128125 |
| 30 | 826<BS<=967 | 62 | 128125<BS<=150000 |
| 31 | 967<BS<=1132 | 63 | BS>150000 |

# FIG. 9

```
        ┌─────────────────┐
        │   Any Data to   │
        │   transmit?     │
        └────────┬────────┘
                 │ Yes
        ┌─────────────────┐
        │ No other SR is in│
        │   progress?     │
        └────────┬────────┘
                 │ Yes
        ┌─────────────────┐
        │ SR_COUNTER = 0  │
        └────────┬────────┘
                 │
        ┌─────────────────┐
  No    │  Is PUCCH for SR│  Yes
 ◄──────│   configured ?  │──────►
        └─────────────────┘
```

Initiate RACH Process

Not in Measurement GAP?
sr-Prohibit Timer not running?

Yes

SR_COUNTER<dsr-TransMAX

No

Yes

· Notify RRC to release PUCCH/SRS
· Clear any configured DL assignment and UL Grants
· Cancer All Pending SRs
· Initiate RACH Process

· SR_COUNTER=SR-COUNTER+1
· Instruct PHY to s end SR
· Start sr-ProhibitTimer

## FIG. 10

```
UE                          BS
         RACH preamble
UE                    BS  |------------------>|
                          |  RACH Response    |
                          |<------------------|
|  RACH procedure      |  | RRC connection request |
|                      |  |------------------>|
                          | RRC connection    |
                          |     setup         |
                          |<------------------|

                          UE        SR        RS
                          |------------------>|
                          |  UL grant for BSR |
| SR,BSR procedure     |  |<------------------|
                          |       BSR         |
                          |------------------>|

                          UE  UL grant for UL data  RS
                          |<------------------|
| UL Data transmission |  |   Data(PUSCH)     |
                          |------------------>|
                          |  Ack/Nack on PHICH|
                          |<------------------|
```

## FIG. 11

# FIG. 12

| G | RACH resource 0 | RACH resource 1 | RACH resource 2 | RACH resource 3 | G | UL resource 0 | UL resource 1 | UL resource 2 | UL resource 3 |

RACH procedure completion time

SR, BSR procedure

UL data resource allocation

# FIG. 13

| G | RACH resource 0 | RACH resource 1 | RACH resource 2 | RACH resource 3 | G | UL resource 0 | UL resource 1 | UL resource 2 | UL resource 3 | UL resource 0 | · · | UL resource 3 |
|---|---|---|---|---|---|---|---|---|---|---|---|---|

## FIG. 14

# FIG. 15

UL resource 0    UL resource 1    UL resource 2    UL resource 3

| G | RACH resource 0 | RACH resource 0 | RACH resource 2 | RACH resource 3 | G | | | | | | | |

AVAILABLE UL RESOURCE
REGION OF INITIALLY
ACCESSING UE

SR PROCEDURE COMPLETION
TIME FOR EACH UL RESOURCE

EP 3 291 628 A1

# FIG. 16

UE

BS

RACH preamble

S1610

RACH Response

S1620

RRC connection request + BSR

S1630

UL grant

S1640

UL data transmission

S1650

27

# FIG. 17

| R | R | E | LCID = 10111 | Oct 1 |
|---|---|---|---|---|

R/R/E/LCID sub-header

(a)

| Type | Buffer Size | Oct 1 |
|---|---|---|

BSR Type 1 MAC Control Elements

(b)

# FIG. 18

DL resource 0 | DL resource 1 | DL resource 2 | DL resource 3 | DL resource 0

↑ UL grant 0          ↑ UL grant 1

UL resource 0 | UL resource 1 | UL resource 2 | UL resource 3 | UL resource 0

UL Data corresponding
to UL grant 0

UL Data corresponding
to UL grant 1

EP 3 291 628 A1

# FIG. 19

(a) GENERAL UL GRANT TRANSMISSION METHOD
UPON CONSIDERING SPLIT METHOD

(b)UL GRANT TRANSMISSION METHOD WHICH USES CROSS
RESOURCE SCHEDULING UPON CONSIDERING SPLIT METHOD

Europäisches
Patentamt

European
Patent Office

Office européen
des brevets

# EUROPEAN SEARCH REPORT

Application Number

EP 17 15 4627

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZTE: "Msg3 in NB-IoT", 3GPP DRAFT; R2-162355 MSG3 IN NB-IOT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Dubrovnik, Croatia; 20160411 - 20160415 2 April 2016 (2016-04-02), XP051082393, Retrieved from the Internet: URL:http://www.3gpp.org/ftp/tsg_ran/WG2_RL 2/TSGR2_93bis/Docs/ [retrieved on 2016-04-02] * paragraphs [0002], [03.3] * ----- | 1-15 | INV. H04W74/00 ADD. H04W74/08 H04W72/12 |
| A | US 2009/268666 A1 (VUJCIC DRAGAN [FR]) 29 October 2009 (2009-10-29) * paragraphs [0052] - [0086] * ----- | 1-15 | |
| A | HUAWEI ET AL: "Random access procedure in NR", 3GPP DRAFT; R2-165361 RANDOM ACCESS PROCEDURE IN NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Gothenburg, Swedish; 20160822 - 20160826 21 August 2016 (2016-08-21), XP051126901, Retrieved from the Internet: URL:http://www.3gpp.org/ftp/Meetings_3GPP_ SYNC/RAN2/Docs/ [retrieved on 2016-08-21] * paragraphs [2.2.3] - [2.2.4] * ----- -/-- | 1-14 | TECHNICAL FIELDS SEARCHED (IPC) H04W |

The present search report has been drawn up for all claims

| Place of search | Date of completion of the search | Examiner |
|---|---|---|
| The Hague | 18 August 2017 | Schut, Gerhard |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 17 15 4627

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | "Data Volume Indicator for NB-IOT", 3GPP DRAFT; R2-162900 DATA VOLUME INDICATOR FOR NB-IOT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. St. Julian's, Malta; 20160215 - 20160219 2 April 2016 (2016-04-02), XP051082630, Retrieved from the Internet: URL:http://www.3gpp.org/ftp/tsg_ran/WG2_RL2/TSGR2_93bis/Docs/ [retrieved on 2016-04-02] * paragraph [0002] * ----- | 1-15 | |

TECHNICAL FIELDS
SEARCHED (IPC)

The present search report has been drawn up for all claims

| Place of search | Date of completion of the search | Examiner |
|---|---|---|
| The Hague | 18 August 2017 | Schut, Gerhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 15 4627

This annex lists the patent family members relating to the patent documents cited in the above-mentioned European search report.
The members are as contained in the European Patent Office EDP file on
The European Patent Office is in no way liable for these particulars which are merely given for the purpose of information.

18-08-2017

| Patent document cited in search report | Publication date | Patent family member(s) | Publication date |
|---|---|---|---|
| US 2009268666 A1 | 29-10-2009 | EP 2269398 A1<br>US 2009268666 A1<br>US 2014286261 A1<br>WO 2009134001 A1 | 05-01-2011<br>29-10-2009<br>25-09-2014<br>05-11-2009 |

EPO FORM P0459

For more details about this annex : see Official Journal of the European Patent Office, No. 12/82